# EUROPÄISCHE PATENTANMELDUNG

(11) **EP 0 884 568 A1**
(43) Veröffentlichungstag der Anmeldung: **16.12.1998**
(21) Anmeldenummer: 98110286.6
(22) Anmeldetag: 05.06.1998
(51) Int. Cl.: G01K 11/26, G01D 5/48

(54) **Verfahren zur Erfassung und Auswertung von temperaturabhängigen Verbrauchswerten**

(30) Priorität: 12.06.1997 DE 19724748
(71) Anmelder: Raab Karcher Energy Services GmbH, 45131 Essen (DE)
(72) Erfinder: Wolff, Manfred, Dipl.-Ing., 68526 Ladenburg (DE); Mügge, Günter, Dipl.-Ing., 48159 Münster (DE); Afshari, Afshin, Dr., 45147 Essen (DE)
(74) Vertreter: Stark, Walter, Dr.-Ing.

(57) **Zusammenfassung**

Die Erfindung betrifft ein Verfahren zur Erfassung und Auswertung von temperaturabhängigen Verbrauchswerten oder Meßwerten anderer physikalischer Größen, wobei Sensoren die Meßwerte erfassen und die Meßwerte an eine insbesondere zentrale und rechnergestützt arbeitende Auswerteeinrichtung weitergeleitet werden, insbesondere mit über Funk ablesbaren Oberflächenwellensensoren mit jeweils wenigstens einer Oberflächenwellenanordnung auf einem Substrat mit piezoelektrischen Eigenschaften, das insbesondere auf einem Trägermaterial angebracht ist, wobei die Oberflächenwellensensoren die Meßgrößen erfassen, diese durch eine Ableseeinrichtung mit einer Empfangs- und/oder Sendeeinrichtung abgelesen werden und dann an die insbesondere zentrale und rechnergestützt arbeitende, mit der Ableseeinrichtung kommunizierende Auswerteeinrichtung weitergeleitet werden. Um auch häufig schwankende Verbrauchs-/Meßwerte mit hoher Genauigkeit erfassen zu können, wird ein Verfahren zur Erfassung und Auswertung von temperaturabhängigen Verbrauchswerten oder Meßwerten anderer physikalischer Größen, wobei Sensoren die Meßwerte erfassen und die Meßwerte an eine insbesondere zentrale und rechnergestützt arbeitende Auswerteeinrichtung weitergeleitet werden, insbesondere mit über Funk ablesbaren Oberflächenwellensensoren mit jeweils wenigstens einer Oberflächenwellenanordnung auf einem Substrat mit piezoelektrischen Eigenschaften, das insbesondere auf einem Trägermaterial angebracht ist, wobei die Oberflächenwellensensoren die Meßgrößen erfassen, diese durch eine Ableseeinrichtung mit einer Empfangs- und/oder Sendeeinrichtung abgelesen werden und dann an die insbesondere zentrale und rechnergestützt arbeitende, mit der Ableseeinrichtung kommunizierende Auswerteeinrichtung weitergeleitet werden, vorgeschlagen, wobei die Werte der Meßgrößen in den Sensoren über der Zeit aufaddiert werden/integriert werden und die Ablesung der Sensoren in zeitlichen Intervallen erfolgt oder bei dem die Auswerteeinrichtung ein Modell anstatt der tatsächlichen Sensoren-Meßwerte zur vergleichsweise Erfassung benutzt, das insbesondere anhand von Intervallmessungen dieses Modell in Abständen überprüft und gegebenenfalls korrigiert wird. Die Erfindung betrifft weiterhin ein Erfassungs- und Auswertesystem für temperaturabhängige Verbrauchswerte oder Meßwerte anderer physikalischer Größen mit Sensoren und einer insbesondere zentralen und rechnergestützt arbeitenden Auswerteeinrichtung, insbesondere mit über Funk ablesbaren Oberflächenwellensensoren mit jeweils wenigstens einer Oberflächenwellenanordnung auf einem Substrat mit piezoelektrischen Eigenschaften, das insbesondere auf einem Trägermaterial angebracht ist, wobei die Oberflächenwellensensoren über eine Ableseeinrichtung mit einer Empfangs- und/oder Sendeeinrichtung mit der Auswerteeinrichtung kommunizieren, insbesondere zur Durchführung der vorstehend aufgeführten erfindungsgemäßen Verfahren, wobei zur Integration des Verbrauchswertes über der Zeit das Substrat aus einem sich bei Temperatureinwirkung beispielsweise durch Verdunstung o. dgl. verändernden Material wie z. B. einem gesättigten Kristall oder Kunststoff besteht.

## Beschreibung

Die Erfindung betrifft ein Verfahren zur Erfassung und Auswertung von temperaturabhängigen Verbrauchswerten oder Meßwerten anderer physikalischer Größen, wobei Sensoren die Meßwerte erfassen und die Meßwerte an eine insbesondere zentrale und rechnergestützt arbeitende Auswerteeinrichtung weitergeleitet werden, insbesondere mit über Funk ablesbaren Oberflächenwellensensoren mit jeweils wenigstens einer Oberflächenwellenanordnung auf einem Substrat mit piezoelektrischen Eigenschaften, das insbesondere auf einem Trägermaterial angebracht ist, wobei die Oberflächenwellensensoren die Meßgrößen erfassen, diese durch eine Ableseeinrichtung mit einer Empfangs- und/oder Sendeeinrichtung abgelesen werden und dann an die insbesondere zentrale und rechnergestützt arbeitende, mit der Ableseeinrichtung kommunizierende Auswerteeinrichtung weitergeleitet werden.

Bei derartigen Verfahren müssen, um auch häufig schwankende Verbrauchs-/Meßwerte mit hoher Genauigkeit erfassen zu können, die Meßwerte entweder kontinuierlich oder aber in sehr kurzen Zeitabständen abgelesen werden, was aufwendig und zeitintensiv ist. Pro Ableseeinrichtung lassen sich insofern nur eine begrenzte Anzahl von Sensoren mit ausreichender Genauigkeit ablesen.

Aufgabe der Erfindung ist es, ein Verfahren zur Erfassung und Auswertung von temperaturabhängigen Verbrauchswerten oder Meßwerten anderer physikalischer Größen anzugeben, mit dem die genannten Nachteile vermieden werden.

Diese Aufgabe wird gelöst durch ein Verfahren zur Erfassung und Auswertung von temperaturabhängigen Verbrauchswerten oder Meßwerten anderer physikalischer Größen, wobei Sensoren die Meßwerte erfassen und die Meßwerte an eine insbesondere zentrale und rechnergestützt arbeitende Auswerteeinrichtung weitergeleitet werden, insbesondere mit über Funk ablesbaren Oberflächenwellensensoren mit jeweils wenigstens einer Oberflächenwellenanordnung auf einem Substrat mit piezoelektrischen Eigenschaften, das insbesondere auf einem Trägermaterial angebracht ist, wobei die Oberflächenwellensensoren die Meßgrößen erfassen, diese durch eine Ableseeinrichtung mit einer Sende-und Empfangseinrichtung abgelesen werden und dann an die insbesondere zentrale und rechnergestützt arbeitende, mit der Ableseeinrichtung kommunizierende Auswerteeinrichtung weitergeleitet werden, wobei die Werte der Meßgrößen in den Sensoren über der Zeit aufaddiert werden/integriert werden und die Ablesung der Sensoren in zeitlichen Intervallen erfolgt, wobei die zeitlichen Intervalle regelmäßig und/oder Verbrauchswert- bzw. Meßwert-abhängig sind. Hierdurch kann auch bei einer Vielzahl von abzulesenden Sensoren eine einzige zentrale Ableseeinrichtung die Auswerteeinrichtung mit den Sensorenmeßwerten versorgen.

Weiterhin wird die Aufgabe gelöst durch ein Verfahren zur Erfassung und Auswertung von temperaturabhängigen Verbrauchswerten oder Meßwerten anderer physikalischer Größen, wobei Sensoren die Meßwerte erfassen und die Meßwerte an eine insbesondere zentrale und rechnergestützt arbeitende Auswerteeinrichtung weitergeleitet werden, insbesondere mit über Funk ablesbaren Oberflächenwellensensoren mit jeweils wenigstens einer Oberflächenwellenanordnung auf einem Substrat mit piezoelektrischen Eigenschaften, das insbesondere auf einem Trägermaterial angebracht ist, wobei die Oberflächenwellensensoren die Meßgrößen erfassen, diese durch eine Ableseeinrichtung mit einer Empfangs- und/oder Sendeeinrichtung abgelesen werden und dann an die insbesondere zentrale und rechnergestützt arbeitende, mit der Ableseeinrichtung kommunizierende Auswerteeinrichtung weitergeleitet werden, wobei die Auswerteeinrichtung ein Modell zur Ergänzung, zur Bewertung oder anstatt der tatsächlichen Sensoren-Meßwerte zur vergleichsweisen Erfassung benutzt. Unter Oberflächenwellensensoren werden sowohl passive als auch aktive Oberflächenwellensensoren verstanden.

Vorteilhafterweise kann dieses Modell in Abständen anhand von Verbrauchs- oder Meßwerten überprüft und gegebenenfalls korrigiert werden.

Hierbei kann das zur vergleichsweisen Erfassung oder zur Ergänzung bzw. Bewertung benutzte Modell anhand einer Anzahl von Messungen durch die Auswerteeinrichtung generiert werden, es kann aber auch ein vereinfachtes physikalisches Verbrauchsmodell sein, das durch vereinfachte Beschreibung der thermischen Eigenschaften oder dergleichen erstellt wird.

Außerdem kann das zur vergleichsweisen Erfassung oder zur Ergänzung bzw. Bewertung benutzte Modell auch durch Reduktion eines mittels exakter Beschreibung der thermischen Eigenschaften oder dergleichen erhaltenen sehr genauen physikalischen Simulationsmodelles auf eine kleineres und einfacheres, das Verhalten des exakten Modelles hinreichend wiedergebendes Vergleichsmodell erstellt werden. Auch hierbei müssen die jeweiligen Sensoren nur noch in größeren Zeitabständen abgefragt werden, was die Abfrageeinrichtung entlastet.

Die Erfindung betrifft weiterhin ein Erfassungs- und Auswertesystem für temperaturabhängige Verbrauchswerte oder Meßwerte anderer physikalischer Größen mit Sensoren und einer insbesondere zentralen und rechnergestützt arbeitenden Auswerteeinrichtung, insbesondere mit über Funk ablesbaren Oberflachenwellensensoren mit jeweils wenigstens einer Oberflächenwellenanordnung auf einem Substrat mit piezoelektrischen Eigenschaften, das insbesondere auf einem Trägermaterial angebracht ist, wobei die Oberflächenwellensensoren über eine Ableseeinrichtung mit einer Empfangs- und/oder Sendeeinrichtung mit der Auswerteeinrichtung kommunizieren, insbesondere zur Durchführung der vorstehend aufgeführten erfindungsgemäßen Verfahren, wobei zur Integration des Verbrauchswertes über der Zeit das Substrat aus einem sich bei Temperatureinwirkung beispielsweise durch Verdunstung o. dgl. verändernden Material wie z. B. einem gesättigten Kristall oder Kunststoff besteht, so daß auch auf diese Weise bei intermitterender Ableseweise der Meßwerte eine hohe Genauigkeit gegeben ist.

Vorteilhafterweise kann wenigstens ein über Funk ablesbarer, eine Referenzfunktion erfüllender Oberflächenwellensensor vorgesehen sein, durch dessen Referenzwerte eine korrekte Funktionsweise der für die Meßwerterfassung vorgesehenen Oberflächenwellensensoren überprüft werden kann.

Vorteilhafterweise kann der die Referenzfunktion erfüllende Oberflächenwellensensor in einen zur Meßwerterfassung vorgesehenen Oberflächenwellensensor integriert sein. Hierbei können zwei verschiedene Oberflächenstrukturen auf einem Trägermaterial angebracht sein, von denen die eine meßwertabhängige Daten und die andere meßwertunabhängige Daten beim Ablesen aussendet.

Bei einem bevorzugten Ausführungsbeispiel der Erfindung kann eine Steuerungseinrichtung, welche die Vorgänge etc., die den Meßwerten zugrunde liegen, steuert, mit der Auswerteeinrichtung verbunden sein, wobei vorzugsweise zur fallspezifischen Anpassung der den Meßwerten zugrunde liegenden Vorgänge durch die Steuerungseinrichtung eine Vielzahl von übliche Verhaltensmuster wiedergebenden Meßwertmustern sowie eine Einrichtung zur Erkennung dieser Muster in der Auswerteeinrichtung enthalten sind. Hierdurch kann zum einen bei Abweichen von vorgegebenen Sollwerten durch die Auswerteeinrichtung und die Steuerungseinrichtung der zu beeinflussende Vorgang etc. entsprechend korrigiert werden, und zum anderen lassen sich durch die Mustererkennung Fehlreaktionen vermeiden. Eine solche Fehlreaktion kann z. B. darin bestehen, daß bei zu regelnden Heizkörpern aufgrund eines starken Temperaturabfalles in Folge von Lüftungsmaßnahmen die Heizleistung erhöht wird, obwohl es sich hierbei um ein vorübergehendes Phänomen handelt und insofern eine Änderung der Heizleistung nicht angezeigt ist.

Erfindungsgemäß kann die Auswerteeinrichtung z. B. zur Sommersperrung von Heizkörpern ein Ventil an einer zentralen, von einem Heizkessel wegführenden und die Heizkörper speisenden Vorlaufleitung ansteuern.

Weiter können zur Wärmeabgabeermittlung von Heizkörpern Oberflächenwellensensoren an Vorlauf- und Rücklaufleitungen zur Vorlauf- bzw. Rücklauftemperaturerfassung vorgesehen sein, und es können zur verursachungsgerechten Heizkostenverteilung zur Erfassung von Außen- und Raumtemperaturen ebenso Oberflächenwellensensoren als Raum- und Außentemperatursensoren vorgesehen sein.

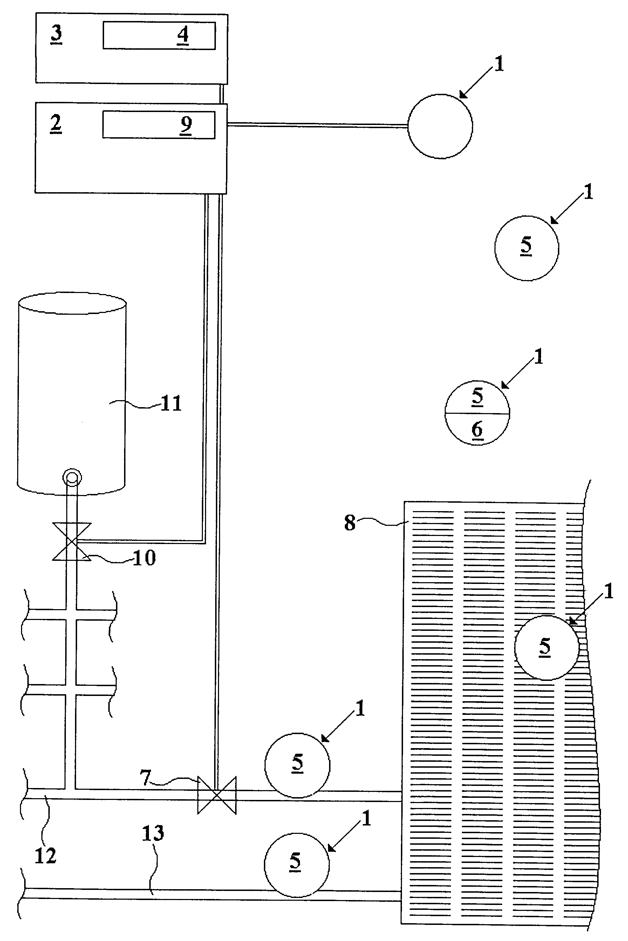

Im folgenden wird ein in der Zeichnung dargestelltes Ausführungsbeispiel der Erfindung erläutert. Die einzige Figur zeigt ein Erfassung- und Auswertesystem für temperaturabhängige Verbrauchswerte oder Meßwerte anderer physikalischer Größen, das zur Wärmeverbrauchserfassung und Heizkostenverteilung eingesetzt wird, mit Sensoren 1 und einer zentralen und rechnergestützt arbeitenden Auswerteeinrichtung 2, die entweder leitungsgebunden oder über eine Ableseeinrichtung 3 mit einer Sende- und Empfangseinrichtung 4 die Verbrauchs- bzw. Meßwerte der als passive, über Funk ablesbare Oberflächenwellensensoren 5 ausgebildeten Sensoren 1 abfragt. In einen Oberflächenwellensensor 5 ist ein eine Referenzfunktion erfüllender Oberflächenwellensensor 6 integriert. Die Auswerteeinrichtung 2 ist mit einer als Ventil ausgebildeten Steuerungseinrichtung 7 verbunden, die den Vorgang, der den Meßwerten zugrunde liegt, nämlich den Durchfluß durch eine Heizkörper 8 steuert, verbunden. Zur fallspezifischen Anpassung des Durchflusses mittels der Steuerungseinrichtung 7 ist in der Auswerteeinrichtung 2 eine Vielzahl von übliche Verhaltensmuster wiedergebenden Meßwertmustern sowie eine Einrichtung 9 zur Erkennung dieser Muster enthalten. So kann die Auswerteeinrichtung 2 z. B. bei stark absinkender Raumtemperatur eine Lüftungsmaßnahme erkennen und gerade nicht den Durchfluß durch den Heizkörper 8 erhöhen.

Weiter steuert die Auswerteeinrichtung 2 z. B. zur Sommersperrung von Heizkörpern 8 ein Ventil 10 an einer zentralen, von einem Heizkessel 11 wegführenden und die Heizkörper 8 speisenden Vorlaufleitung 12 an. Zur Wärmeabgabeermittlung des Heizkörpers sind an Vorlaufleitungen 12 und Rücklaufleitungen 13 Oberflächenwellensensoren 5 zur Vorlauf- bzw. zur Rücklauftemperaturerfassung vorgesehen. Die anderen Oberflächenwellensensoren 5 können z. B. die Raumtemperatur und/oder die Außentemperatur erfassen.

## Patentansprüche

1. Verfahren zur Erfassung und Auswertung von temperaturabhängigen Verbrauchswerten oder Meßwerten anderer physikalischer Größen, wobei Sensoren (1) die Meßwerte erfassen und die Meßwerte an eine insbesondere zentrale und rechnergestützt arbeitende Auswerteeinrichtung (2) weitergeleitet werden, insbesondere mit über Funk ablesbaren Oberflächenwellensensoren (5) mit jeweils wenigstens einer Oberflächenwellenanordnung auf einem Substrat mit piezoelektrischen Eigenschaften, das insbesondere auf einem Trägermaterial angebracht ist, wobei die Oberflächenwellensensoren (5) die Meßgrößen erfassen, diese durch eine Ableseeinrichtung (3) mit einer Empfangs- und/oder Sendeeinrichtung (4) abgelesen werden und dann an die insbesondere zentrale und rechnergestützt arbeitende, mit der Ableseeinrichtung (3) kommunizierende Auswerteeinrichtung (2) weitergeleitet werden, dadurch gekennzeichnet, daß die Werte der Meßgrößen in den Sensoren (1) über der Zeit aufaddiert werden/integriert werden und die Abfrage der Sensoren (1) in zeitlichen Intervallen erfolgt, wobei die zeitlichen Intervalle regelmäßig und/oder Verbrauchswert- bzw. Meßwert-abhängig sind.

2. Verfahren zur Erfassung und Auswertung von temperaturabhängigen Verbrauchswerten oder Meßwerten anderer physikalischer Größen, wobei Sensoren (1) die Meßwerte erfassen und die Meßwerte an eine insbesondere zentrale und rechnergestützt arbeitende Auswerteeinrichtung (2) weitergeleitet werden, insbesondere mit über Funk ablesbaren Oberflächenwellensensoren (5) mit jeweils wenigstens einer Oberflächenwellenanordnung auf einem Substrat mit piezoelektrischen Eigenschaften, das insbesondere auf einem Trägermaterial angebracht ist, wobei die Oberflächenwellensensoren (5) die Meßgrößen erfassen, diese durch eine Ableseeinrichtung (3) mit einer Empfangs- und/oder Sendeeinrichtung (4) abgelesen werden und dann an die insbesondere zentrale und rechnergestützt arbeitende, mit der Ableseeinrichtung (3) kommunizierende Auswerteeinrichtung (2) weitergeleitet werden, dadurch gekennzeichnet, daß die Auswerteeinrichtung (2) ein Modell zur Ergänzung, zur Bewertung oder anstatt der tatsächlichen Sensoren-Meßwerte zur vergleichsweisen Erfassung benutzt.

3. Verfahren nach Anspruch 2, dadurch gekennzeichnet, daß das zur vergleichsweisen Erfassung oder zur Ergänzung benutzte Modell in Abständen anhand von Verbrauchs- oder Meßwerten überprüft und gegebenenfalls korrigiert wird.

4. Verfahren nach Anspruch 2, dadurch gekennzeichnet, daß das zur vergleichsweisen Erfassung oder zur Ergänzung bzw. Bewertung benutzte Modell anhand einer Anzahl von Messungen durch die Auswerteeinrichtung (2) generiert wird.

5. Verfahren nach Anspruch 2, dadurch gekennzeichnet, daß das zur vergleichsweisen Erfassung oder zur Ergänzung bzw. Bewertung benutzte Modell ein vereinfachtes physikalisches Verbrauchsmodell ist, das durch vereinfachte Beschreibung der thermischen Eigenschaften oder dergleichen erstellt wird.

6. Verfahren nach Anspruch 2, dadurch gekennzeichnet, daß das zur vergleichsweise Erfassung oder zur Ergänzung bzw. Bewertung benutzte Modell durch Reduktion eines mittels exakter Beschreibung der thermischen Eigenschaften oder dergleichen erhaltenen sehr genauen physikalischen Simulationsmodelles auf ein kleineres und einfacheres, das Verhalten des exakten Modelles hinreichend wiedergebendes Ersatzmodell erstellt wird.

7. Erfassungs- und Auswertesystem für temperaturabhängige Verbrauchswerte oder Meßwerte anderer physikalischer Größen mit Sensoren (1) und einer insbesondere zentralen und rechnergestützt arbeitenden Auswerteeinrichtung (2), insbesondere mit über Funk ablesbaren Oberflächenwellensensoren (5) mit jeweils wenigstens einer Oberflächenwellenanordnung auf einem Substrat mit piezoelektrischen Eigenschaften, das insbesondere auf einem Trägermaterial angebracht ist, wobei die Oberflächenwellensensoren (5) über eine Ableseeinrichtung (3) mit einer Empfangs-und/oder Sendeeinrichtung (4) mit der Auswerteeinrichtung (2) kommunizieren, insbesondere zur Durchführung des Verfahrens nach einem der Ansprüche 1 bis 6, dadurch gekennzeichnet, daß zur Integration des Verbrauchswertes über der Zeit das Substrat aus einem sich bei Temperatureinwirkung beispielsweise durch Verdunstung o. dgl. verändernden Material wie z. B. einem gesättigten Kristall oder Kunststoff besteht.

8. Erfassungs- und Auswertesystem nach Anspruch 7, dadurch gekennzeichnet, daß wenigstens ein über Funk ablesbarer, eine Referenzfunktion erfüllender Oberflächenwellensensor (6) vorgesehen ist.

9. Erfassungs- und Auswertesystem nach Anspruch 8, dadurch gekennzeichnet, daß der die Referenzfunktion erfüllende Oberflächenwellensensor (6) in einen zur Meßwerterfassung vorgesehenen Oberflächenwellensensor (5) integriert ist.

10. Erfassungs- und Auswertesystem nach einem der Ansprüche 7 bis 9, dadurch gekennzeichnet, daß eine Steuerungseinrichtung (7), welche die Vorgänge etc., die den Meßwerten zugrunde liegen, steuert, mit der Auswerteeinrichtung (2) verbunden ist.

11. Erfassungs- und Auswertesystem nach Anspruch 10, dadurch gekennzeichnet, daß zur fallspezifischen Anpassung der den Meßwerten zugrunde liegenden Vorgänge durch die Steuerungseinrichtung (7) eine Vielzahl von übliche Verhaltensmuster wiedergebenden Meßwertmustern sowie eine Einrichtung (9) zur Erkennung dieser Muster in der Auswerteeinrichtung (2) enthalten ist.

12. Erfassungs- und Auswertesystem nach einem der Ansprüche 7 bis 11, dadurch gekennzeichnet, daß die Auswerteeinrichtung (2) z. B. zur Sommersperrung von Heizkörpern (8) ein Ventil (10) an einer zentralen, von einem Heizkessel (11) wegführenden und die Heizkörper (8) speisenden Vorlaufleitung (12) ansteuert.

13. Erfassungs- und Auswertesystem nach einem der Ansprüche 7 bis 12, dadurch gekennzeichnet, daß zur Wärmeabgabeermittlung von Heizkörpern (8) Oberflächenwellensensoren (5) an Vorlauf- (12) und Rücklaufleitungen (13) zur Vorlauf- bzw. Rücklauftemperaturerfassung vorgesehen sind.

14. Erfassungs- und Auswertesystem nach einem der Ansprüche 7 bis 13, dadurch gekennzeichnet, daß zur verursachergerechten Heizkostenverteilung durch Erfassen von Außen- und Raumtemperaturen Oberflächenwellensensoren (5) als Raum- und Außentemperatursensoren vorgesehen sind.
